# EUROPEAN PATENT APPLICATION

(11) **EP 4 834 760 A1**
(43) Date of publication of application: **04.11.2026**
(21) Application number: 23962993.4
(22) Date of filing: 25.12.2023
(51) Int. Cl.: B64C 39/02, B64C 27/08, B64U 101/40, B64U 101/45

(54) **FLIGHT VEHICLE**

(71) Applicant: Kubota Corporation, Osaka-shi, Osaka 530-0011 (JP)
(72) Inventor: SEINO, Kohei, Sakai-shi, Osaka 590-0908 (JP); NAKAGAWA, Hiroyoshi, Sakai-shi, Osaka 590-0908 (JP)
(74) Representative: Cabinet Beau de Loménie
(86) International application number: PCT/JP2023/046357
(87) International publication number: WO 2025/141631

(57) **Abstract**

An aircraft 1 that performs work on a work site while flying includes a main body, a work device 8 held by the main body via a hold member, and a control unit 13 configured to control the flight and control the work device 8. The control unit 13 controls at least either the flight or the work in accordance with a position of the work device 8.

## Description

### Technical Field

The present invention relates to an aircraft that holds a work device configured to perform work on a work site.

### Background Art

A work drone (drone) includes a work device and performs work on a field (work site) while flying, as described in Patent Document 1. The work drone performs work on a predetermined area of the field by moving along a movement route (flight route).

### Prior Art Documents

### Patent Documents

Patent Document 1: JP 2023-041675A

### Disclosure of the Invention

### Problem to be Solved by the Invention

However, while the work device is held by the main body of the drone via a hold member, the work device is positioned so as to overlap the main body of the drone in a plan view. If the work device sways during flight, the work device may be displaced in a planar direction (front-rear and left-right directions) relative to the main body.

For example, inertia may act on the work device during flight of the drone, causing the work device to move with a delay relative to the main body of the drone and deviate in a direction opposite to the travel direction of the drone. Further, the work device may sway relative to the main body of the drone due to wind effects during flight, causing the work device to be displaced in a planar direction (front-rear and left-right directions) relative to the main body of the drone.

If the work device is displaced relative to the main body of the drone in this manner, the work device may deviate from a position suitable for performing work even if the drone flies at an appropriate position. In such a case, the work device cannot perform appropriately.

An object of the present invention is to enable a work device to accurately perform work on a work site even when the work device is displaced relative to a main body.

### Means for Solving Problem

To achieve the above object, an aircraft according to one embodiment of the present invention is an aircraft configured to perform work on a work site while flying, and includes: a main body; a work device held by the main body via a hold member; and a control unit configured to control the flight and control the work device, the control unit being configured to control at least one of the flight and the work in accordance with a position of the work device.

The aircraft is controlled to fly over the work site, and the work device held by the aircraft performs work on the work site.

The work device held by the aircraft via the hold member may sway relative to the aircraft (main body) due to inertia or wind effects during the flight of the aircraft. If the work device sways, the positional relationship between the work device and the main body will deviate in the horizontal direction, and the work device will be displaced relative to the position at which it is to perform work even if the flight of the aircraft is controlled relative to the work site.

According to the above configuration, the aircraft flies and the work device performs work in accordance with the position of the work device. Therefore, even if the work device is displaced relative to the main body, the work device can accurately perform work on the work site.

In addition, the aircraft may further include a position detection device configured to acquire position information of the work device.

This type of configuration makes it possible to accurately acquire the position of the work device, enables the aircraft to accurately transport the work device to a position at which the work device is to perform work, and enables the work device to accurately perform the work on the work site.

Further, the position information may be a relative position with respect to the main body.

While the aircraft is able to fly accurately relative to the position at which work is to be performed, the position of the work device can be sufficiently detected to the required extent if the positional relationship between the main body and the work device is known. According to the above configuration, the position detection device acquires the relative position of the work device with respect to the main body, and the control unit can thereby control the aircraft such that the work device moves to an appropriate position in accordance with the positional relationship between the main body and the work device. As a result, the work device can accurately perform work on the work site

Further, the work site may be divided into a work-permitted area in which the work is performed and a work-prohibited area in which the work is prohibited, and if the work device is present in the work-prohibited area, the control unit may be configured to prohibit the work device from performing the work.

The work device performs work in the work-permitted area of the work site, and is prohibited from performing work in the work-prohibited area. If the main body and the work device are displaced relative to each other, even if it is possible to determine whether the main body is located in the work-permitted area or in the work-prohibited area, it is not clear which area the work device is located in.

According to the above configuration, the control unit can directly determine whether the work device is located in the work-permitted area or in the work-prohibited area. As a result, the control unit can accurately determine that the work device is located in the work-permitted area, and the work device can accurately perform work on a predetermined work site (work-permitted area)

Further, the work site may be divided into a work-permitted area in which the work is performed and a work-prohibited area in which the work is prohibited, and if the work device is present in the work-prohibited area, the control unit may be configured to control the flight in such a manner as to return the work device to the work-permitted area.

This type of configuration facilitates keeping the work device in the work-permitted area during work, and enables the work device to accurately perform work on a predetermined work site (work-permitted area).

Further, the work site may be divided into a work-permitted area in which the work is performed and a work-prohibited area in which the work is prohibited, and the control unit may be configured to control the flight in such a manner that the work device remains in the work-permitted area.

This type of configuration enables the work device to accurately perform work on a predetermined work site (work-permitted area)

Further, the control unit may be configured to cause the work device to perform the work if the work device is present in the work-permitted area, even if the main body is present in the work-prohibited area.

Even while the main body is located in the work-prohibited area, the work device can perform work at an appropriate position as long as the work device is located in the work-permitted area. According to the above configuration, the work device can perform work on a predetermined work site (work-permitted area) accurately, regardless of the position of the main body.

Further, the control unit may be configured to control the flight in such a manner that the work device follows a predetermined movement route.

This type of configuration enables the aircraft to easily and appropriately move the work device relative to the work site, and enables the work device to accurately perform work on the work site
Further, the control unit may be configured to control the flight in such a manner as to reduce a deviation of the work device from the movement route.

This type of configuration enables the work device to move along a movement route for performing work and accurately perform work on the work site.

Further, the aircraft may further include a flight-route generation unit configured to generate a flight route of the main body based on the movement route, and the flight-route generation unit may be configured to adjust the flight route in accordance with the position of the work device.

This type of configuration enables the aircraft to fly more easily such that the work device follows the movement route. As a result, the work device can more easily perform work on the work site with high accuracy.

### Brief Description of the Drawings

FIG. 1 illustrates a configuration in which a drone holds a work device.
FIG. 2 illustrates a work site and a work path.
FIG. 3 illustrates a control system of the drone that holds the work device.
FIG. 4 illustrates displacement of the work device relative to a main body of the drone.
FIG. 5 illustrates a flight state of the drone holding the work device.
FIG. 6 illustrates the relationship between a flight route, a movement route, and a work-permitted area.
FIG. 7 illustrates a configuration for controlling a flight route.
FIG. 8 illustrates a flow in which work is performed while the work device is present in the work-permitted area.
FIG. 9 illustrates three-dimensional movement paths of the main body and the work device.
FIG. 10 illustrates the relationship between a flight route, a movement route, and a no-fly area.

### Best Mode for Carrying out the Invention

### [Overall Configuration]

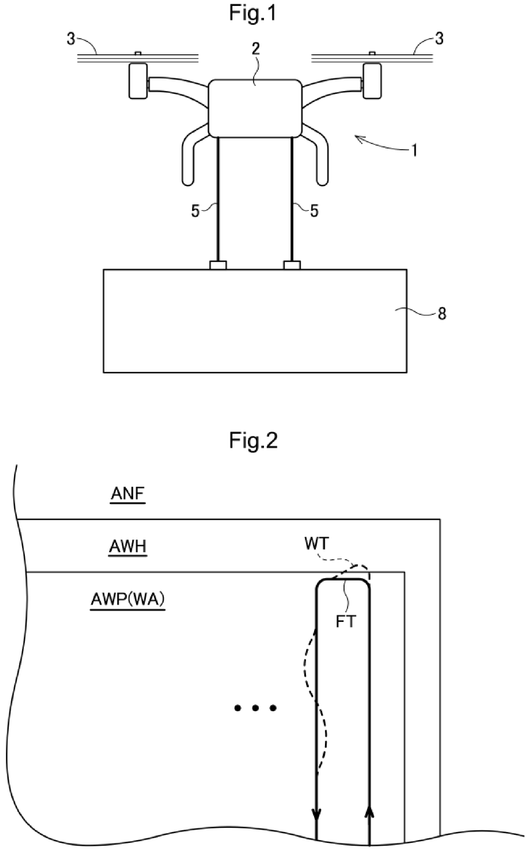

First, with reference to FIG. 1, a description will be given, of an aircraft that flies while holding a work device 8, taking as an example a drone 1 that suspends the work device 8. Note that the work device 8 performs predetermined work on a work site such as a field. For example, the work device 8 may be a chemical sprayer for spraying chemicals onto a field, or an agricultural machine that performs another agricultural work, or another type of work machine that performs work on a work site.

The drone 1, which is one example of the aircraft, includes a main body 2. The drone 1 includes multiple rotors 3, each of which is an example of a lift generation unit used for flight, and a hold member. The rotors 3 are supported by the main body 2. The drone 1 includes a main rotor (main lift generation unit) and a sub-rotor (auxiliary lift generation unit) as the rotors 3. The main rotor generates lift for propelling (levitating, ascending, and descending) and flying the aircraft, and the sub-rotor is used for controlling the attitude of the drone 1. The hold member includes, for example, four wires 5, and may include one or more wires 5. Also, the hold member may be a rod-shaped member having high rigidity.

The drone 1 can fly while carrying the work device 8 by holding the work device 8 via the wires 5. The work device 8 can perform predetermined work while flying and being held by the drone 1. The wires 5 hold the work device 8 in a detachable manner.

### [Work on Work Site]

Next, the work site and the work performed by the work device 8 on the work site will be described with reference to FIGS. 1 and 2.

The drone 1 flies from a barn in which the drone 1 is stored, or from a truck or the like that transports the drone 1, to the work site. Upon the drone 1 arriving at the work site, a work area WA of the work site is specified, and the work site is divided into a work-permitted area AWP and a work-prohibited area AWH, which will be described later. Furthermore, a flight-permitted area APF and a no-fly area ANF may be set in any manner, or preset, in and around the work site. After the work is finished, the drone 1 flies back to the barn or truck.

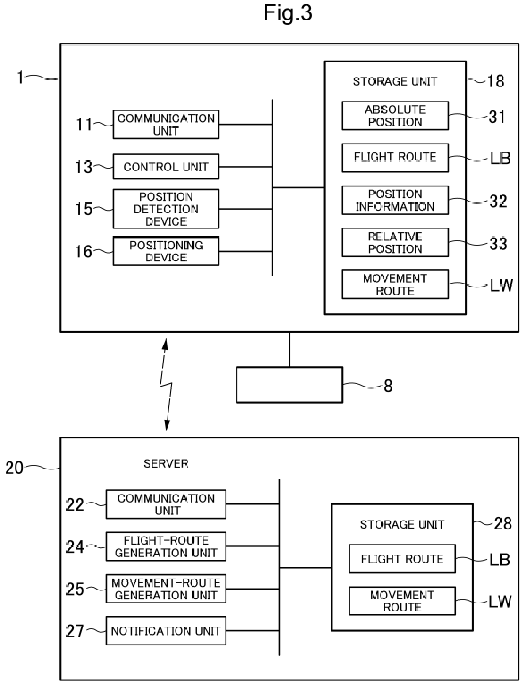

The work device 8 performs work on a predetermined work area WA of the work site. Therefore, the drone 1 flies such that the work device 8 moves in the work area WA. For example, the work device 8 moves back and forth within the work area WA. Since the work device 8 performs work on the work area WA, first, a movement route LW (see FIG. 3) along which the work device 8 is to move during flight is determined. Then, a flight route LB (see FIG. 3) of the drone 1 (main body 2) is set such that the work device 8 moves along the movement route LW. The drone 1 flies along the flight route LB, the path along which the work device 8 moves with the flight corresponds to a work-machine path WT, and the path along which the drone 1 flies corresponds to a flight path FT. While moving with the flight of the drone 1 in this manner, the work device 8 performs predetermined work on the work area WA.

### [Control System]

Next, a control system that controls the flight of the drone 1 and the work performed by the work device 8 will be described with reference to FIGS. 1 and 3.

The control system includes a communication unit 11, a control unit 13, a position detection device 15, a positioning device 16, a storage unit 18, and a server 20. The communication unit 11, the control unit 13, the position detection device 15, the positioning device 16, and the storage unit 18 are mounted in the drone 1. The server 20 is capable of data communication with the drone 1 and is disposed at any location such as a work base, a storage location of the drone 1, or a location around the work site. The server 20 includes a communication unit 22, a flight-route generation unit 24, a movement-route generation unit 25, a notification unit 27, and a storage unit 28.

The communication unit 11 of the drone 1 performs various types of data communication with the server 20 and other devices. The communication unit 22 of the server 20 performs various types of data communication with the drone 1 and other devices. The storage unit 18 and the storage unit 28 store various information and data. The notification unit 27 performs predetermined notifications.

The flight-route generation unit 24 generates the flight route LB, which is a target route (target route for the aircraft body) for the drone 1 (main body 2), and stores the generated flight route LB in the storage unit 28. The flight route LB is a target route along which the drone 1 (main body 2) is to fly such that the work device 8 can perform work in a predetermined order on a predetermined area of the work area WA. The communication unit 22 transmits the generated flight route LB stored in the storage unit 28 to the drone 1, and the communication unit 11 of the drone 1 stores the received flight route LB in the storage unit 18 of the drone 1.

The movement-route generation unit 25 generates a movement route LW, which is a target route (target route for work) for the work device 8, and stores the generated movement route LW in the storage unit 28. The movement route LW is a target route along which the work device 8 is to move in order to perform work in a predetermined order on a predetermined area of the work area WA. The communication unit 22 transmits the generated movement route LW stored in the storage unit 28 to the drone 1, and the communication unit 11 of the drone 1 stores the received movement route LW in the storage unit 18 of the drone 1.

The positioning device 16 measures an absolute position 31 of the drone 1 (main body 2). The absolute position 31 is information in which at least a position relative to the work site is uniquely defined. The positioning device 16 is provided in the main body 2 and may be a satellite positioning unit that receives radio waves from satellites of a global navigation satellite system (GNSS, such as GPS, GLONASS, Galileo, Michibiki, or BeiDou (BeiDou Navigation Satellite System)) to obtain the absolute position 31. Note that the positioning device 16 may measure the absolute position 31 by any configuration.

The position detection device 15 acquires position information 32 of the work device 8. Specifically, the position detection device 15 acquires, as the position information 32, a relative position 33 relative to the main body 2. For example, the position detection device 15 is a camera, and captures an image of the main body 2 and the work device 8 and acquires the relative position 33 of the work device 8 with respect to the main body 2 based on the positional relationship between the main body 2 and the work device 8. The camera may be provided in the main body 2 or the work device 8. Note that the position detection device 15 may be a light detection and ranging (LiDAR) device in place of a camera. The LiDAR device measures the positional relationship between the main body 2 and the work device 8 and acquires the relative position 33 of the work device 8 with respect to the main body 2. The position detection device 15 may further be a satellite positioning unit, in which case absolute position information of the work device 8 may be acquired as the position information 32.

The control unit 13 controls the flight of the drone 1 and the work performed by the work device 8. Specifically, the control unit 13 controls the drone 1 such that the drone 1 (main body 2) flies along the flight route LB based on the absolute position 31 of the main body 2, while controlling the work device 8 so as to perform work at a predetermined position.

### [Displacement of Work Device]

Here, the drone 1 (main body 2) performs back-and-forth flight inside the work area WA, including turning flight. The work device 8 performs work while moving basically along the same path (work-machine path WT) as the main body 2. Note that the flight of the drone 1 is not limited to back-and-forth flight, and the drone 1 can perform work while performing any type of flight. As a result of the drone 1 flying along the flight route LB, the drone 1 draws the flight path FT, and the work device 8 draws the work-machine path WT.

However, there are cases where, when the work device 8 is affected by inertia, wind, or the like, the work device 8 sways and is displaced by a displacement amount ΔX relative to the main body 2, and thus the work-machine path WT of the work device 8 may deviate from the flight path FT of the drone 1 (the movement route LW of the work device 8), as shown in FIGS. 2, 4, and 6. In other words, the work-machine path WT of the work device 8 may deviate from the flight route LB by the displacement amount ΔX. For example, there are cases where, while the drone 1 turns, the work device 8 moves wider than the main body 2 due to inertia, causing the work device 8 to be displaced from the flight route LB (movement route LW). There are also cases where, even while the drone 1 flies straight, the work device 8 sways left and right relative to the travel direction of the main body 2 due to wind effects, and thus the work device 8 is displaced from the flight route LB (movement route LW) by the displacement amount ΔX.

Here, the work site is divided into a work-permitted area AWP, in which work is performed, and a work-prohibited area AWH, in which work is prohibited. Since the flight route LB is a route for the work device 8 to perform work in a predetermined order on a predetermined area of the work area WA, if the work device 8 is displaced from the flight route LB (movement route LW), the work device 8 cannot perform work appropriately on the work area WA. Further, there are also cases where the work device 8 even protrudes into the work-prohibited area AWH and performs work at an inappropriate position.

Therefore, the drone 1 (control unit 13) controls at least either the flight of the drone 1 or the work performed by the work device 8 in accordance with the position of the work device 8. Specifically, the control unit 13 performs control in accordance with the absolute position 31 while adjusting the control based on the relative position 33. That is, the control unit 13 performs control such that the main body 2 flies along the flight route LB based on the absolute position 31 of the main body 2, and further controls the flight such that the work device 8 moves along the movement route LW based on the relative position 33 of the work device 8. For example, when the work device 8 deviates from the movement route LW, the drone 1 flies so as to pull the work device 8 back onto the movement route LW. At this time, the control unit 13 acquires a deviation between the work device 8 and the movement route LW, the deviation including an orientation of the deviation (orientation deviation) and a distance of the deviation (distance deviation) of the work device 8 with respect to the movement route LW. If the work device 8 deviates from the movement route LW, the control unit 13 controls the flight of the drone 1 based at least on the orientation deviation such that the work device 8 approaches the movement route LW. By controlling the flight based on the orientation deviation, for example, the work device 8 can be brought back into the work-permitted area AWP and prevented from protruding into the work-prohibited area AWH. Furthermore, the control unit 13 may also control the distance by which the main body 2 is returned in a direction opposite to the orientation deviation, based on the distance deviation. By controlling the flight so as to reduce the deviation between the work device 8 and the movement route LW, the drone 1 flies such that the flight path of the main body 2 coincides with a corrected flight path FTN. At this time, the flight-route generation unit 24 may newly generate a flight route LBN such that the flight path of the main body 2 coincides with the corrected flight path FTN.

By controlling the flight of the drone 1 in accordance with the position of the work device 8, the control of the drone 1 can be executed quickly in response to displacement (bulging of the work-machine path WT) of the work device 8, thereby making it possible to minimize the bulging of the work-machine path WT. As a result, the work-machine path WT of the work device 8 can be made to follow (i.e., substantially match) the flight route LB (movement route LW), thereby allowing the work device 8 to move at an appropriate position in the work area WA. Further, by controlling the work performed by the work device 8 in accordance with the position of the work device 8, the work device 8 can be configured to perform work only while the work device 8 is flying on the flight route LB (movement route LW). With the above configuration, even if the work device 8 is displaced relative to the main body 2, the work device 8 can be restrained from performing work at an inappropriate position, and can accurately perform work on the work area WA.

Specific configurations of such control will be described below as Embodiments 1 to 3. Embodiments 1 to 3 may be implemented independently or in combination of at least two of Embodiments 1 to 3.

### [Embodiment 1]

First, the drone 1 (control system) according to Embodiment 1 will be described with reference to FIGS. 3 to 8, as well as FIGS. 1 and 2.

As described above, the drone 1 flies within the work-permitted area AWP and performs work with the work device 8 within the work-permitted area AWP. Therefore, as described above, first, the movement route LW of the work device 8 is determined, and the flight route LB of the drone 1 (main body 2) is set in accordance with the movement route LW. Then, the drone 1 flies along the flight route LB in order to perform work with the work device 8 on the work area WA.

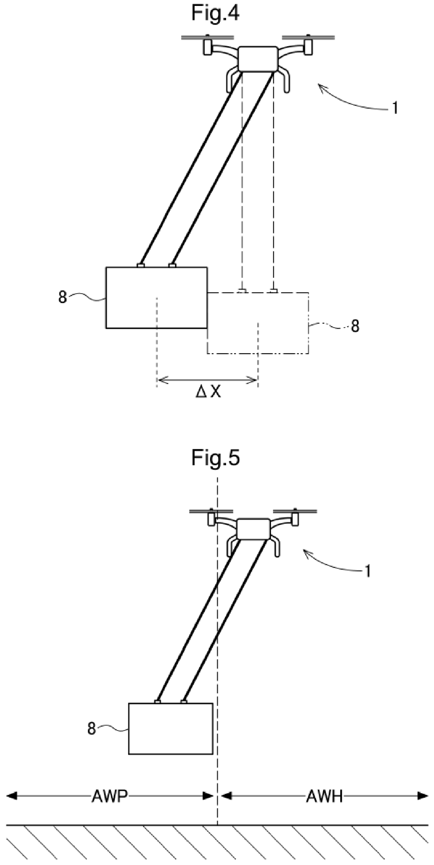

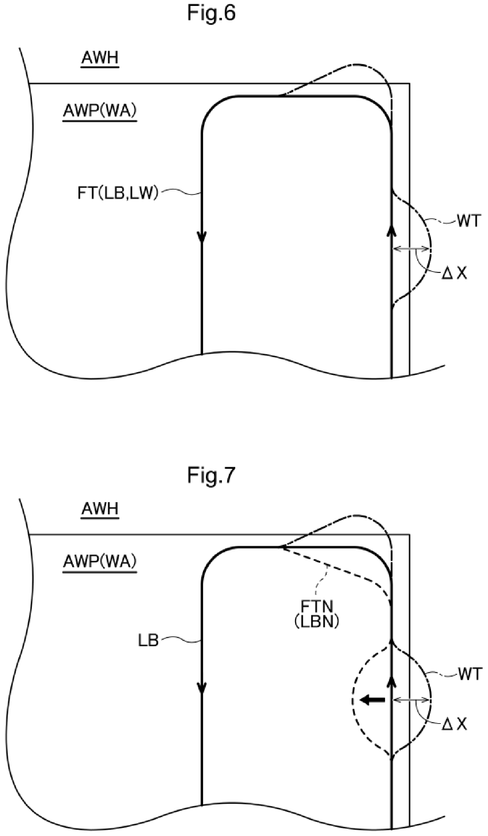

However, even if the drone 1 flies along the flight route LB, the work device 8 may deviate from the movement route LW. For example, even if the drone 1 attempts to fly while maintaining the main body 2 within the work-permitted area AWP, there are cases where the main body 2 protrudes into the work-prohibited area AWH (FIG. 5), or the work device 8 sways and the work-machine path WT of the work device 8 deviates from the movement route LW, causing the work device 8 to protrude into the work-prohibited area AWH (FIG. 6). In such situations, even if the main body 2 is present within the work-permitted area AWP, the work device 8 may perform work within the work-prohibited area AWH if the work device 8 is located in the work-prohibited area AWH. Conversely, even if the main body 2 is located in the work-prohibited area AWH, the work device 8 can be restrained from performing work in the work-prohibited area AWH as long as the work device 8 is present in the work-permitted area AWP.

Therefore, the drone 1 (control unit 13) according to Embodiment 1 controls at least either the flight of the drone 1 or the work performed by the work device 8 in accordance with the position of the work device 8. For example, the control unit 13 causes the work device 8 to perform work while the work device 8 is present in the work-permitted area AWP. Specifically, the control unit 13 causes the work device 8 to perform work while the work device 8 is present in the work-permitted area AWP, regardless of whether the main body 2 is present in the work-permitted area AWP or in the work-prohibited area AWH.

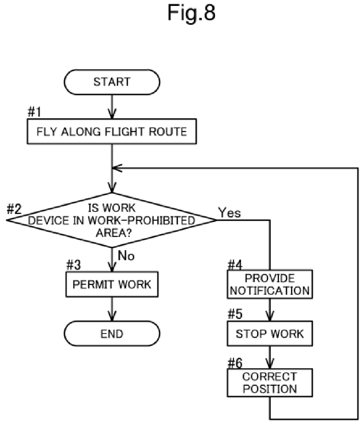

That is, the control unit 13 first controls the drone 1 such that the drone 1 (main body 2) flies along the flight route LB (step #1 of FIG. 8). At this time, the control unit 13 determines whether the work device 8 is present in the work-permitted area AWP or in the work-prohibited area AWH, based on information regarding the work site, including information on the work-permitted area AWP and the work-prohibited area AWH, as well as the absolute position 31 and the relative position 33 (step #2 of FIG. 8). Further, the control unit 13 acquires a deviation between the work device 8 and the movement route LW.

If the work device 8 is present in the work-permitted area AWP (No in step #2 of FIG. 8), the control unit 13 permits the work device 8 to execute work (step #3 of FIG. 8).

If the work device 8 deviates from the movement route LW and is present in the work-prohibited area AWH (Yes in step #2 of FIG. 8), the control unit 13 provides a notification indicating that the work device 8 is present in the work-prohibited area AWH or that the flight route of the drone 1 needs to be corrected (step #4 of FIG. 8), and causes the work device 8 to stop the work (step #5 of FIG. 8).

Further, the control unit 13 may adjust the flight control of the drone 1 to cause the work device 8 to return to (or remain within) the work-permitted area AWP (step #5 of FIG. 8). For example, the control unit 13 controls the drone 1 to fly off the flight route LB so as to correct the position of the main body 2 to return the work device 8 to the work-permitted area AWP. That is, if the work device 8 is displaced relative to the main body 2 (if the relative position 33 takes a large value), the control unit 13 judges, based on the orientation deviation, the direction in which the work device 8 is to be moved (pulled back), and determines the direction in which the drone 1 (main body 2) is to change its travel direction (i.e., to turn or bulge) based on the direction in which the drone 1 is flying. Then, the control unit 13 performs control to cause the drone 1 to fly in the determined direction, away from the flight route LB, thereby causing the work device 8 to move along (i.e., pulling back the work device 8 to) the movement route LW. As a result, the drone 1 flies while bulging in the direction opposite to the direction in which the work device 8 bulges (i.e., deviates from the movement route LW), and causes the work device 8 to move along (i.e., pulls back the work device 8 to) the movement route LW. Note that, at this time, in order to correct the position of the main body 2 such that the work device 8 returns to the work-permitted area AWP, the flight-route generation unit 24 may correct (adjust) the flight route LB itself by a distance approximately equal to the displacement amount ΔX in a direction opposite to the direction in which the work device 8 deviates (i.e., a direction from the work-prohibited area AWH toward the work-permitted area AWP) and generate a new flight route LBN as shown in FIG. 7. Upon the drone 1 flying along the new flight route LBN, the drone 1 flies such that the flight path of the main body 2 coincides with the corrected flight path FTN. Thereafter, the control unit 13 repeats the control from step #2 until the work ends.

As described above, by controlling the work performed by the work device 8 in accordance with the position of the work device 8, the control unit 13 can permit the work device 8 to perform work as scheduled if the work device 8 is present in the work-permitted area AWP, and can cause the work device 8 to stop the work if the work device 8 is present in the work-prohibited area AWH, regardless of the position of the main body 2. As a result, even when the work device 8 is displaced relative to the main body 2, the work device 8 can be restrained from performing work at an inappropriate position, and the work device 8 can accurately perform work on the work area WA.

Furthermore, the control unit 13 can return the work device 8 present in the work-prohibited area AWH to the work-permitted area AWP by controlling the flight of the drone 1 in accordance with the position of the work device 8. As a result, even if the work device 8 is displaced relative to the main body 2, the work device 8 can be returned to an appropriate position, and the work device 8 can accurately perform work on the work area WA.

### [Embodiment 2]

Next, a drone 1 (control system) according to Embodiment 2 will be described with reference to FIGS. 3, 9, and 10 as well as FIGS. 1 and 2.

As described above, first, the movement route LW of the work device 8 is determined, and the flight route LB of the drone 1 (main body 2) is set in accordance with the movement route LW. Then, the drone 1 flies along the flight route LB to perform work with the work device 8 within the work area WA such that the work device 8 performs the work appropriately and efficiently in the work area WA.

However, even if the flight of the drone 1 along the flight route LB is attempted, there may be cases where the work device 8 sways and deviates from the flight route LB (movement route LW). In this manner, even if the main body 2 flies along the flight route LB, if the work device 8 moves off the movement route LW, there is concern that the work device 8 may perform work at an inappropriate position. Conversely, even if the main body 2 flies off from the flight route LB, the work device 8 can be prevented from performing work at an inappropriate position as long as the work device 8 moves along the movement route LW.

Therefore, the drone 1 (control unit 13) according to Embodiment 2 controls flight such that the work device 8 follows the movement route LW.

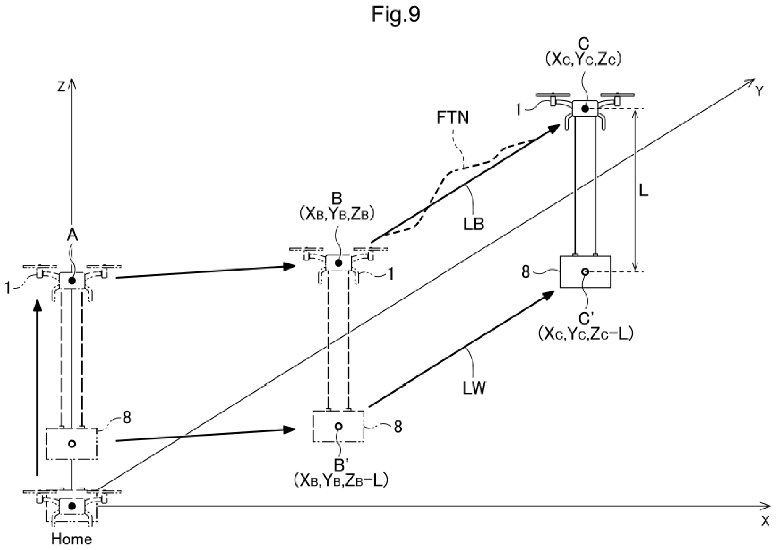

For example, it is assumed that, as shown in FIG. 9, the control unit 13 controls the drone 1 (main body 2) to fly from a Home point on the ground to a point C along the flight route LB. If the work device 8 is not displaced relative to the main body 2 during flight, the work device 8 will move along the movement route LW.

At this time, the control unit 13 first causes, at the Home point, the drone 1 to ascend to a point A.

Next, while the control unit 13 causes the drone 1 to fly along the flight route LB to a point B, the work device 8 moves along the movement route LW. At this time, if the three-dimensional coordinates of the point B are denoted as (X_{B}, Y_{B}, Z_{B}), and the length of the hold member (from the main body 2 to the work device 8) is denoted as L, then a position B' of the work device 8 when the drone 1 is located at the point B is (X_{B}, Y_{B}, Z_{B}-L).

Then, the control unit 13 causes the drone 1 to fly from the point B to the point C along the flight route LB. At this time, the three-dimensional coordinates of the point C are (X_{C}, Y_{C}, Z_{C}), and a position C' of the work device 8 when the drone 1 is located at the point C is (X_{C}, Y_{C}, Z_{C}-L).

Here, while the drone 1 moves from the point B to the point C, if the work device 8 is displaced relative to the main body 2, the work device 8 will not move along the movement route LW. Therefore, the drone 1 (control unit 13) according to Embodiment 2 controls the flight such that the work device 8 moves along the movement route LW based on the position information 32 of the work device 8 and the movement route LW. That is, the control unit 13 determines whether the work device 8 deviates from the movement route LW (i.e., the work device 8 is displaced relative to the main body 2), and if the work device 8 deviates from the movement route LW, the control unit 13 allows the drone 1 to fly off the flight route LB at least temporarily and controls the flight of the drone 1 such that the work device 8 moves along the movement route LW. Further, the flight-route generation unit 24 may generate a new flight route LBN by correcting (adjusting) the flight route LB itself so as to correct the position of the main body 2 such that the work device 8 moves along the movement route LW, and the drone 1 may then fly along the new flight route LBN. If the drone 1 flies such that the work device 8 moves along the movement route LW, the flight path FT of the drone 1 becomes a corrected flight path FTN, and the corrected (new) flight route LBN is a route that follows the corrected flight path FTN.

Thus, the control unit 13 controls the flight such that the work device 8 follows the movement route LW. With this configuration, the work device 8 can be restrained from being located off the movement route LW, and the work device 8 can be positioned at an appropriate location in the work area WA. As a result, even when the work device 8 is displaced relative to the main body 2, the work device 8 can be restrained from performing work at an inappropriate position, and the work device 8 can accurately perform work on the work area WA.

Note that at least either the movement route LW or the flight route LB may include not only a planar route but also a route in the height direction relative to the work site.

There are cases where an obstacle OB is present at the work site. Since work is not performed in an area where the obstacle OB is present, the flight route LB is generated such that the planar route thereof avoids the obstacle OB.

In the case where the height of the obstacle OB is known in advance, if the flight route LB includes a route in the height direction, the flight-route generation unit 24 can generate a flight route LB that avoids the obstacle OB in the height direction. Further, if the movement route LW includes a route in the height direction, the movement-route generation unit 25 can generate a movement route LW that avoids the obstacle OB in the height direction.

Therefore, when at least either the movement route LW or the flight route LB includes a route in the height direction, even if obstacles OB are present, the drone 1 can fly while easily avoiding the obstacle OB.

Further, the control unit 13 may control the flight of the drone 1 such that the work device 8 always moves along the movement route LW without using the flight route LB. This enables the work device 8 to efficiently move along the movement route LW.

Further, if the control unit 13 determines that the work device 8 deviates from the movement route LW, the control unit 13 may cause the notification unit 27 to provide a notification of this deviation. This enables an operator (monitor) to recognize that the work device 8 has deviated from the movement route LW and take appropriate measures in preparation for a situation in which appropriate work cannot be performed.

### [Embodiment 3]

Next, a drone 1 (control system) according to Embodiment 3 will be described with reference to FIGS. 3 and 10 as well as FIGS. 1 and 2.

As described above, the airspace in an area around the work site is divided into the flight-permitted area APF (geofence) and the no-fly zone ANF, and the drone 1 is prohibited from entering the no-fly zone ANF. The no-fly zone ANF is an area in which the drone 1 is prohibited from flying for safety reasons due to the presence of residences or the like.

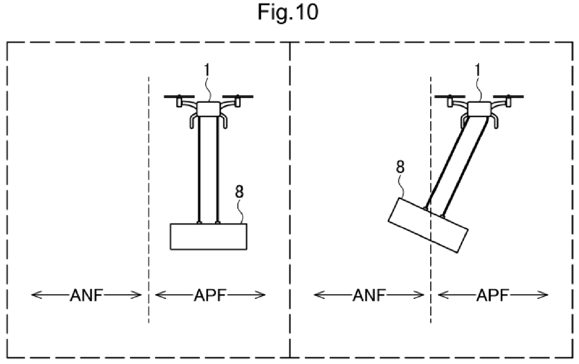

However, if the work device 8 is displaced relative to the main body 2, even if the main body 2 remains within the flight-permitted area APF, there may be cases where the work device 8 enters (protrudes into) the no-fly zone ANF as shown in FIG. 10.

Therefore, the drone 1 (control unit 13) according to Embodiment 3 controls the flight such that the work device 8 remains within the flight-permitted area APF.

Specifically, during flight of the drone 1 along the flight route LB, the control unit 13 determines whether the main body 2 is approaching the no-fly zone ANF based on information regarding the work site, including information on the flight-permitted area APF and the no-fly zone ANF, as well as the absolute position 31 of the drone 1 (main body 2). If the drone 1 deviates from the flight route LB and the main body 2 is approaching the no-fly zone ANF, the control unit 13 controls the flight such that the main body 2 remains within the flight-permitted area APF.

At the same time, the control unit 13 determines whether the work device 8 is approaching the no-fly zone ANF based on the information of the work site including the information on the flight-permitted area APF and the no-fly zone ANF, as well as the position information 32 of the work device 8. If the work device 8 is approaching the no-fly zone ANF, the control unit 13 controls the flight such that the work device 8 remains within the flight-permitted area APF.

Thus, even if the work device 8 is displaced relative to the main body 2, the work device 8 can be restrained from entering the no-fly zone ANF with a simple configuration. Further, due to the work device 8 being restrained from entering the no-fly zone ANF, the work device 8 is more likely to remain within the work area WA and can accurately perform work on the work area WA.

Note that if the control unit 13 determines that the work device 8 is approaching the no-fly zone ANF, the control unit 13 may cause the notification unit 27 to provide a notification of this determination. Thus, the operator (monitor) can recognize that there is concern that the work device 8 will enter the no-fly zone ANF, and can take appropriate measures.

### [Other Embodiments]

(1) In each of the above embodiments, when the control unit 13 controls the drone 1 so as to fly along the flight route LB, the control unit 13 may not only control the flight of the drone 1 in accordance with the relative position 33 of the work device 8, but may also control the work performed by the work device 8 in accordance with the relative position 33 of the work device 8. Alternatively, the control unit 13 may control only the work performed by the work device 8. In this case, a configuration may be employed in which the movement route LW is not generated, and the control unit 13 controls at least either the flight of the drone 1 or the work performed by the work device 8 based on the absolute position 31 of the drone 1, the relative position 33 of the work device 8, and the flight route LB.
(2) In each of the above embodiments and other embodiments, a configuration may be employed in which the drone 1 does not include the position detection device 15 but includes a measuring means that measure the position of the work device 8. Alternatively, the drone 1 may be configured to measure the position of the work device 8 from outside the machine body of the drone 1, e.g., from a base on the ground, or the like.
   The position detection device 15 is not limited to being configured to acquire the positional relationship relative to the main body 2 as the position information 32, and may also acquire absolute position information 32 of the work device 8. In this case, the position detection device 15 determines the relative position 33 based on the absolute position 31 of the main body 2 and the absolute position information 32 of the work device 8. Furthermore, in response to the absolute position information 32 of the work device 8 being acquired, the control unit 13 may control at least either the flight or the work based on the absolute position information 32 of the work device 8.
(3) In each of the above embodiments and other embodiments, the control system is not limited to being constituted by functional blocks such as those described above, and may be constituted by any functional blocks. For example, each functional block of the control system may be further subdivided, or conversely, some or all functional blocks may be combined. Moreover, the functions of the control system are not limited to the above-described functional blocks, and may be implemented by a method executed by any functional blocks. Further, some or all of the functions of the control system may be constituted by software. A program relating to the software is stored in any storage device, such as the storage unit 18 or the storage unit 28, and executed by a processor such as a CPU included in the control system or a separately provided processor.
   The flight-route generation unit 24 and the movement-route generation unit 25 may be provided in the server 20, but may alternatively be provided in the drone 1. This configuration enables the drone 1 to independently generate the flight route LB and the movement route LW and perform flight and work.
(4) The work-permitted area AWP may be an area identical to the work area WA, but the work-permitted area AWP may alternatively be set as an area including the work area WA.
(5) The notification unit 27 is not limited to being provided in the server 20 and may alternatively be provided in the drone 1 or at any location where the operator (monitor) can receive notifications. The notification provided by the notification unit 27 may be in any form such as sound, light, or vibration, or may be a communication notification to a mobile information terminal carried by the operator (monitor). Further, a configuration may also be employed in which the notification unit 27 is not provided. In this case, the control unit 13 can be configured to not perform predetermined notifications.
(6) The work device 8 is not limited to being suspended from the main body 2 via the hold member, and may be held in any direction relative to the main body 2.

### Industrial Applicability

The present invention can be applied to an aircraft that flies while holding a work device.

### Description of Reference Signs

1: Drone (aircraft)
2: Main body
5: Wire (hold member)
8: Work device
11: Communication unit
13: Control unit
15: Position detection device
16: Positioning device
24: Flight-route generation unit
25: Movement-route generation unit
27: Notification unit
31: Absolute position
32: Position information
33: Relative position
ANF: No-fly area
APF: Flight-permitted area
AWH: Work-prohibited area
AWP: Work-permitted area
LB: Flight route
LW: Movement route

## Claims

1. An aircraft configured to perform work on a work site while flying, comprising:
a main body;
a work device held by the main body via a hold member; and
a control unit configured to control the flight and control the work device,
the control unit being configured to control at least one of the flight and the work in accordance with a position of the work device.

2. The aircraft according to claim 1, further comprising a position detection device configured to acquire position information of the work device.

3. The aircraft according to claim 2, wherein the position information is a relative position with respect to the main body.

4. The aircraft according to any one of claims 1 to 3,
wherein the work site is divided into a work-permitted area in which the work is performed and a work-prohibited area in which the work is prohibited, and
if the work device is present in the work-prohibited area, the control unit is configured to prohibit the work device from performing the work.

5. The aircraft according to any one of claims 1 to 3,
wherein the work site is divided into a work-permitted area in which the work is performed and a work-prohibited area in which the work is prohibited, and
if the work device is present in the work-prohibited area, the control unit is configured to control the flight in such a manner as to return the work device to the work-permitted area.

6. The aircraft according to any one of claims 1 to 3,
wherein the work site is divided into a work-permitted area in which the work is performed and a work-prohibited area in which the work is prohibited, and
the control unit is configured to control the flight in such a manner that the work device remains in the work-permitted area.

7. The aircraft according to any one of claims 4 to 6,
wherein the control unit is configured to cause the work device to perform the work if the work device is present in the work-permitted area, even if the main body is present in the work-prohibited area.

8. The aircraft according to any one of claims 1 to 7,
wherein the control unit is configured to control the flight in such a manner that the work device follows a predetermined movement route.

9. The aircraft according to claim 8,
wherein the control unit is configured to control the flight in such a manner as to reduce a deviation of the work device from the movement route.

10. The aircraft according to claim 8 or 9, further comprising:
a flight-route generation unit configured to generate a flight route of the main body based on the movement route,
wherein the flight-route generation unit is configured to adjust the flight route in accordance with the position of the work device.
